# EUROPÄISCHE PATENTSCHRIFT

(11) **EP 4 144 467 B1**
(45) Veröffentlichungstag und Bekanntmachung des Hinweises auf die Patenterteilung: **21.08.2024**
(21) Anmeldenummer: 22191884.0
(22) Anmeldetag: 24.08.2022
(51) Int. Cl.: B23B 31/30, B23B 31/40, B23B 31/20

(54) **SPANNEINRICHTUNG**
CLAMPING DEVICE
DISPOSITIF DE SERRAGE

(30) Priorität: 31.08.2021 DE 102021122532
(43) Veröffentlichungstag der Anmeldung: 08.03.2023
(73) Patentinhaber: Schunk GmbH & Co. KG Spann- und Greiftechnik, 74348 Lauffen am Neckar (DE)
(72) Erfinder: Buchholz, Jürgen, 74348 Lauffen (DE); Schumacher, Alexander, 74382 Neckarwestheim (DE); Prosi, Nicolai, 74348 Lauffen (DE); Koblinger, Roland, 71522 Becknang (DE); Rost, Norman, 74336 Brackenheim (DE)
(74) Vertreter: Paul & Albrecht Patentanwälte PartG mbB

(56) Entgegenhaltungen:
- EP-B1- 1 584 389
- DE-A1- 102010 009 172
- DE-A1- 102012 215 036
- DE-A1- 102017 116 617

## Beschreibung

Die vorliegende Erfindung betrifft eine Spanneinrichtung, ausgebildet als Spannzangenfutter, mit einem eine Spannachse definierenden Gehäuse mit einem Grundkörper, einer Betätigungseinheit, die in dem Gehäuse axial verstellbar gehalten ist, einer nach Art einer Spannzange ausgebildeten Spannhülse, die an der Betätigungseinheit gehalten ist, um mit dieser axial verstellt zu werden, und die eine zu einer Vorderseite des Gehäuses offene zentrale Aufnahme für ein zu spannendes Bauteil aufweist, und einem in Umfangsrichtung geschlossenen Spannring, welcher lösbar am Gehäuse fixiert ist, wobei an der Außenseite der Spannhülse und der Innenseite des Spannrings zueinander korrespondierende Eingriffsflächen ausgebildet sind, die miteinander in Eingriff stehen und zusammenwirken, um eine insbesondere nach hinten gerichtete axiale Spannbewegung der Betätigungseinheit und damit der Spannhülse in eine radial nach innen gerichtete elastische Verformung der Spannhülse umzusetzen, um ein Bauteil zu spannen. Eine solche Spanneinrichtung ist aus DE1 02017116617 bekannt.

Ferner betrifft die vorliegende Erfindung eine Spanneinrichtung, ausgebildet als Spannzangendorn, mit einem eine Spannachse definierenden Gehäuse mit einem Grundkörper, einer Betätigungseinheit, die in dem Gehäuse axial verstellbar gehalten ist, einer nach Art einer Spannzange ausgebildeten Spannhülse, die an der Betätigungseinheit gehalten ist, um mit dieser axial verstellt zu werden, und an der Außenseite eine Spannfläche für ein von einer Vorderseite auf die Spannhülse aufzusetzendes, zu spannendes Bauteil definiert, einem in Umfangsrichtung geschlossenen Spannring, welcher am Grundkörper fixiert ist, wobei an der Innenseite der Spannhülse und der Außenseite des Spannrings zueinander korrespondierende Eingriffsflächen ausgebildet sind, die miteinander in Eingriff stehen und zusammenwirken, um eine insbesondere nach hinten gerichtete axiale Spannbewegung der Betätigungseinheit und damit der Spannhülse in eine radial nach außen gerichtete elastische Verformung der Spannhülse umzusetzen, um ein Bauteil zu spannen.

Als Spannzangenfutter oder Spannzangendorn ausgebildete Spanneinrichtungen der vorgenannten Art sind bekannt und werden in der Praxis beispielsweise eingesetzt, um ein Bauteil an einer entsprechenden Werkzeugmaschine zu fixieren.

Spannzangenfutter besitzen üblicherweise ein Gehäuse mit einem Grundkörper, welcher zu seiner vorderen Stirnfläche hin offen ausgebildet ist. In dem Gehäuse ist eine in Form einer Spannzange ausgebildete, in radialer Richtung elastisch verformbare Spannhülse angeordnet, welche eine zentrale Aufnahme mit einer innenseitigen Spannfläche für ein zu spannendes Bauteil aufweist. Die Spannhülse besitzt außenseitig eine konusförmige Eingriffsfläche, welche sich nach hinten verjüngt und welche mit einer korrespondierenden gehäusefesten Eingriffsfläche derart zusammenwirkt, dass eine axiale Spannbewegung der Spannhülse in eine radial nach innen gerichtete elastische Verformung der Spannhülse umgesetzt wird, so dass ein in die Spannhülse eingesetztes Bauteil kraftschlüssig fixiert werden kann. Die korrespondierende Eingriffsfläche kann dabei direkt am Grundkörper ausgebildet sein. Alternativ kann die korrespondierende Eingriffsfläche auch an einem fest im Grundkörper angeordneten Spannring angeordnet sein. Zur Betätigung der Spannhülse können entsprechende Betätigungsmittel vorgesehen sein. Diese können beispielsweise einen Spannkolben umfassen, welcher hydraulisch oder pneumatisch betätigt wird und die Spannhülse axial bewegt.

Als Spannzangendorne ausgebildete Spanneinrichtungen sind prinzipiell ähnlich ausgebildet. Allerdings besitzt die Spannhülse keine zentrale Aufnahme mit einer innenseitigen Spannfläche, sondern außenseitig eine zylindrische Spannfläche, so dass ein Bauteil von innen gespannt wird. Dementsprechend besitzt die Spannhülse innenseitig eine Eingriffsfläche, welche mit einer korrespondierenden Eingriffsfläche derart zusammenwirkt, dass die Spannhülse radial nach außen elastisch verformt wird, um ein auf die Spannfläche aufgeschobenes Bauteil zu spannen, wenn die Spannhülse axial in einer Spannrichtung verstellt wird. Die korrespondierende Eingriffsfläche kann am Grundkörper oder an einem fest mit dem Grundkörper verbundenen Spannring angeordnet sein. Auch bei einer als Spannzangendorn ausgebildeten Spanneinrichtung sind entsprechende Betätigungsmittel vorgesehen.

Für die Verstellung der Spannhülse können unterschiedlich ausgestaltete Betätigungsmittel vorgesehen sein. Häufig erfolgt die Verstellung mittels eines hydraulisch oder pneumatisch betätigbaren Spannkolbens. Hierzu ist dann in dem Gehäuse eine Druckkammer ausgebildet, die mit einem Hydraulikmittel beaufschlagbar ist, um den Spannkolben entgegen der Rückstellkraft von elastischen Rückstellelementen z.B. in der Form von Schraubendruckfedern axial zu bewegen. Gleichermaßen kann die Betätigung auf andere Weise, beispielsweise elektrisch, erfolgen.

Die bekannten Spanneinrichtungen haben sich in der Praxis durchaus bewährt. Als nachteilig wird jedoch gelegentlich empfunden, dass solche Spanneinrichtungen stets nur für ein sehr begrenztes Bauteilspektrum geeignet ist, da die Spannhülse aufgrund ihrer eingeschränkten Elastizität nur Bauteile innerhalb eines sehr engen Spanndurchmesserbereichs greifen kann.

Aufgabe der vorliegenden Erfindung ist es daher, als Spannzangenfutter und als Spannzangendorne ausgebildete Spanneinrichtungen zu schaffen, welche sich universell einsetzen lassen und insbesondere die vorgenannten Nachteile vermeiden.

Diese Aufgabe ist bei Spanneinrichtungen, welche als Spannzangenfutter oder als Spannzangendorn ausgebildet sind, dadurch gelöst, dass hydraulische Dehnspannmittel vorgesehen sind, welche ausgebildet und geeignet sind, den Spannring lösbar am Grundkörper zu fixieren.

Der Erfindung liegt damit die Überlegung zugrunde, die Spanneinrichtung nicht mit einer am Grundkörper oder an einem fest mit dem Grundkörper verbundenen Spannring ausgebildeten Eingriffsfläche zu versehen, sondern einen auswechselbaren Spannring vorzusehen, welcher eine entsprechende Eingriffsfläche aufweist. Dadurch kann in einfacher Weise ein Spannring entnommen werden und durch einen anderen Spannring, dessen Eingriffsfläche einen anderen Durchmesser aufweist und der mit einer anderen Spannhülse mit einem anderen Spanndurchmesser verwendet werden kann, ersetzt werden. Somit wird die Variabilität der Spanneinrichtung erheblich gesteigert. Eine hydraulische Dehnspanneinrichtung stellt dabei eine einfache Möglichkeit dar, einen Spannring lösbar am Grundkörper zu befestigen.

Die erfindungsgemäße, als Spannzangenfutter ausgebildete Spanneinrichtung kann derart ausgestaltet sein, dass das Gehäuse eine zu seiner Vorderseite offene zentrale Öffnung aufweist, und die hydraulischen Dehnspannmittel eine mit einem Hydraulikmittel beaufschlagbare Druckkammer umfassen, welche in dem Grundkörper ausgebildet ist und die zentrale Öffnung ringförmig umgibt oder über den Umfang verteilt mehrere bevorzugt fluidisch miteinander verbundene Druckkammerabschnitte aufweist, wobei zwischen der zentralen Öffnung und der Druckkammer eine dünne Wandung vorgesehen ist, die durch eine Druckerhöhung des Drucks in der Drucckammer elastisch radial nach innen verformbar ist, um den Spannring in der zentralen Öffnung kraftschlüssig zu fixieren. Mit anderen Worten besitzt das Gehäuse eine zentrale Öffnung, welche bevorzugt einen kreiszylindrischen Querschnitt aufweist und deren Innenfläche zumindest über einen axialen Teilabschnitt durch eine dünne Wandung gebildet wird, die elastisch radial nach innen verformbar ist. Der Durchmesser der zentralen Öffnung ist dabei geringfügig größer als der Außendurchmesser des Spannrings. Dadurch kann der Spannring mit Spiel in die zentrale Öffnung eingesetzt werden. Anschließend kann der Druck in der Druckkammer erhöht werden, so dass sich die dünne Wandung elastisch radial nach innen verformt. Auf diese Weise wird der Spannring durch einen Spanndruck von außen kraftschlüssig fixiert. Soll ein fixierter Spannring entnommen werden, so wird der Druck in der Druckkammer abgesenkt, so dass sich die dünne Wandung elastisch in ihren Ursprungszustand zurückverformt. Der zuvor fixierte Spannring kann dann ohne Probleme aus der zentralen Öffnung entnommen werden.

In konkreter Ausgestaltung können die hydraulischen Dehnspannmittel eine in den Grundkörper eingesetzte Dehnbüchse umfassen, welche die Drucckammer radial nach innen begrenzt und die dünne Wandung bildet. Mit anderen Worten ist das Gehäuse in diesem Bereich mehrteilig ausgebildet, so dass die Druckkammer radial nach außen durch den Grundkörper und radial nach innen durch eine Dehnbüchse begrenzt wird.

Bevorzugt erstreckt sich die Dehnbüchse ausgehend von der vorderen Stirnfläche des Grundkörpers in diesen. Dabei kann die Dehnbüchse flanschartig ausgebildet sein und insbesondere mittels mehrerer über den Umfang angeordneter Schrauben mit dem Grundkörper verschraubt sein. Insbesondere können je nach Durchmesser über den Umfang verteilt sechs, acht oder zwölf Schrauben vorgesehen sein. Dadurch wird eine stabile Anbringung der Dehnbüchse an dem Grundkörper gewährleistet, die auch hohen Drücken in der Druckkammer standhält. Prinzipiell ist es auch denkbar, die Dehnbüchse mit dem Grundkörper stoffschlüssig zu verbinden, z.B. zu verlöten oder zu verschweißen. Auch eine einteilige Ausgestaltung des Gehäuses in diesem Bereich ist denkbar, wenn der Grundkörper beispielsweise mittels eines generativen Fertigungsverfahrens, insbesondere mittels selektiven Laserschmelzens hergestellt wird.

Die Druckkammer kann mittels geeigneter Dichtmittel, insbesondere mittels umlaufender Dichtringe, die bevorzugt in in dem Grundkörper ausgebildeten Nuten verlaufen, abgedichtet sein. Auf diese Weise kann eine zuverlässige Abdichtung der Druckkammer auch bei hohen Spanndrücken erzielt werden.

Eine exakte axiale Positionierung des Spannrings im Gehäuse kann dadurch sichergestellt werden, dass der Spannring an der Rückwand der zentralen Öffnung, welche sich bevorzugt senkrecht zur Spannachse erstreckt, anliegt.

Die Eingriffsfläche des Spannrings kann konusförmig ausgebildet sein und sich insbesondere nach hinten verjüngen. Dementsprechend ist die Eingriffsfläche der Spannhülse dazu korrespondierend ausgebildet. Durch solche konusförmige Eingriffsflächen kann eine axiale Bewegung auf einfache Weise in eine radiale Spannbewegung der Spannhülse umgesetzt werden. Die konusförmige Eingriffsfläche des Spannrings und die korrespondierende Eingriffsfläche der Spannhülse ist dabei bevorzugt um einen Winkel von mindestens 5° und/oder höchstens 10°, insbesondere um etwa 7,5° zur Spannachse geneigt.

Um die Spannhülse relativ zum Spannring radial zur Spannachse zu führen, können die Spannhülse insbesondere in einem axial hinter der Eingriffsfläche liegenden Bereich eine kreiszylindrische äußere Führungsfläche und der Spannring eine korrespondierende innere Führungsfläche aufweisen. Mit anderen Worten ist zwischen der äußeren kreiszylindrischen Führungsfläche der Spannhülse und der inneren Führungsfläche des Spannrings nur ein sehr geringes Spiel ausgebildet, wodurch ein Verkanten oder ein Blockieren der Spannhülse relativ zum Spannring vermieden werden kann.

Die Betätigungsmittel können mindestens einen Betätigungskolben umfassen, welcher axial verschiebbar in einer zentralen Aussparung des Grundkörpers gelagert ist. Bevorzugt umfasst die Betätigungseinheit einen vorderen Betätigungskolben, der in einer nach vorne offenen zentralen Aussparung des Grundkörpers axial verschiebbar gelagert ist, und einen mit diesem verbundenen hinteren Betätigungskolben, welcher in einer nach hinten offenen zentralen Aussparung des Grundkörpers axial verschiebbar gelagert ist. Dadurch wird eine Zweipunktführung der beiden Betätigungskolben im Grundkörper realisiert.

Der vordere Betätigungskolben und der hintere Betätigungskolben können über mindestens ein Verbindungselement miteinander verbunden, insbesondere verschraubt sein, wobei jedes Verbindungselement eine Durchgangsbohrung des Grundkörpers durchsetzt. Die Durchgangsbohrung(en) verläuft/verlaufen dabei bevorzugt exzentrisch zur Spannachse. Insbesondere kann das Verbindungselement eine dieses vollständig axial durchsetzende Bohrung aufweisen, so dass durch der hintere Betätigungskolben und der vordere Betätigungskolben mit einer Schraube verbunden sind, welche die Bohrung des Verbindungselements vollständig durchsetzt. Bevorzugt sind um die Spannachse über den Umfang verteilt drei Verbindungselemente vorgesehen. Durch die exzentrische Anordnung der Durchgangsbohrung(en) und damit des Verbindungselements relativ zur Spannachse werden die beiden Betätigungskolben zusätzlich gegen ein unbeabsichtigtes Drehen um die Spannachse gesichert.

Die Betätigungseinheit kann über eine Bajonettverbindung mit der Spannhülse, insbesondere mit einer scheibenartigen Rückwand der Spannhülse verbunden sein. Eine Bajonettverbindung ist eine schnell herzustellende und wieder lösbare mechanische Verbindung zweier Bauteile. Die beiden Teile werden dabei durch Ineinanderstecken und entgegengesetztes Drehen verbunden und so auch wieder getrennt.

Ferner können Sicherungsmittel vorgesehen sein, um den Spannring gegen ein Verdrehen relativ zum Gehäuse zu sichern. In konkreter Ausgestaltung können die Sicherungsmittel einen Sicherungsbolzen umfassen, welcher am Grundkörper befestigt ist und von hinten in die zentrale Öffnung derart ragt, dass er in eine korrespondierende, nach hinten offene Aussparung des Spannrings eingreifen kann. Die Aussparung im Spannring kann dabei insbesondere als eine diesen radial durchsetzende Nut ausgebildet sein. Auf diese Weise wird ein unbeabsichtigtes Verdrehen des Spannrings um die Spannachse sicher vermieden.

Bei einer als Spannzangendorn ausgebildeten Spanneinrichtung kann das Gehäuse einen zentralen, dornartigen Vorsprung aufweisen. Dabei können die hydraulischen Dehnspannmittel eine mit einem Hydraulikmittel beaufschlagbare Druckkammer umfassen, welche in dem zentralen Vorsprung ringförmig umlaufend ausgebildet ist oder über den Umfang verteilt mehrere bevorzugt fluidisch miteinander verbundene Druckkammerabschnitte aufweist, wobei zwischen der Umfangswand des zentralen Vorsprungs und der Druckkammer eine dünne Wandung vorgesehen ist, die durch eine Erhöhung des Drucks in der Druckkammer elastisch radial nach außen verformbar ist, um den Spannring auf dem zentralen Vorsprung von innen kraftschlüssig zu fixieren. Mit anderen Worten wird der Spannring direkt von innen fixiert. Der Innendurchmesser des Spannrings ist dabei geringfügig größer als der Außendurchmesser des zentralen, dornartigen Vorsprungs des Gehäuses. Dadurch kann der Spannring in einfacher Weise auf den Vorsprung aufgeschoben werden. Durch Erhöhung des Drucks in der Druckkammer wird dann die dünne Wandung radial nach außen verformt, so dass der Spannring kraftschlüssig fixiert wird. Soll ein fixierter Spannring entnommen werden, so kann auf einfache Weise der Druck in der Druckkammer reduziert werden, was zur Folge hat, dass sich die dünne Wandung elastisch zurück in ihre ursprüngliche Geometrie verformt. Dadurch besteht wieder eine Spielpassung zwischen dem vorderen Vorsprung und dem Spannring, so dass dieser auf einfache Weise entnommen werden kann. Bevorzugt befindet sich die Druckkammer zumindest teilweise axial im Bereich der Eingriffsflächen, d.h. direkt radial innerhalb der Eingriffsflächen. Dadurch kann eine kompakte Bauweise des Spannrings realisiert werden.

In bevorzugter Ausgestaltung dieser Ausführungsform können die hydraulischen Dehnspannmittel eine auf den Grundkörper aufgeschobene Dehnbüchse umfassen, welche die Druckkammer radial nach außen begrenzt und die dünne Wandung bildet, wobei die Dehnbüchse mit dem Grundkörper insbesondere stoffschlüssig verbunden, bevorzugt verlötet oder verschweißt ist. Durch eine stoffschlüssige Verbindung kann eine zuverlässige Abdichtung realisiert werden, die auch hohen Drücken in der Druckkammer standhält.

Gemäß einer alternativen Ausführungsform des erfindungsgemäßen Spannzangendorns kann der Spannring einen vorderen Eingriffsabschnitt, an welchem die Eingriffsfläche ausgebildet ist, und einen hinteren Befestigungsabschnitt aufweisen, wobei das Gehäuse eine zu einer Vorderseite hin offene zentrale Öffnung aufweist und die hydraulischen Dehnspannmittel eine mit einem Hydraulikmittel beaufschlagbare Druckkammer umfassen, welche die zentrale Öffnung ringförmig umgibt oder über den Umfang verteilt mehrere bevorzugt fluidisch miteinander verbundene Druckkammerabschnitte aufweist, wobei zwischen der zentralen Öffnung und der Druckkammer eine dünne Wandung vorgesehen ist, die durch eine Druckerhöhung des Drucks in der Druckkammer elastisch radial nach innen verformbar ist, um den Spannring in der zentralen Öffnung kraftschlüssig zu fixieren.

Dieser Ausgestaltung liegt die Überlegung zugrunde, die Befestigung des Spannrings mittels einer hydraulischen Dehnspanneinrichtung nicht direkt radial innerhalb der Eingriffsflächen vorzunehmen, sondern axial versetzt zu den Eingriffsflächen. Der Befestigungsabschnitt des Spannrings besitzt dabei bevorzugt einen kreisförmigen Querschnitt, wobei der Durchmesser geringfügig kleiner ist als der Innendurchmesser der zentralen Öffnung des Gehäuses. Dadurch kann der Spannring mit dem Befestigungsabschnitt auf einfache Weise in die offene zentrale Öffnung eingesetzt werden.

In weiterer Ausgestaltung dieser Ausführungsform können die hydraulischen Dehnspannmittel eine von der vorderen Stirnseite in den Grundkörper eingesetzte Dehnbüchse umfassen, welche die Druckkammer radial nach innen begrenzt und die dünne Wandung bildet, wobei die Dehnbüchse mit dem Grundkörper insbesondere stoffschlüssig verbunden, bevorzugt verlötet oder verschweißt ist.

In gleicher Weise wie bei den als Spannzangenfutter ausgebildeten Spanneinrichtungen kann auch bei als Spannzangendorn ausgebildeten Spanneinrichtungen die Eingriffsfläche des Spannrings konusförmig ausgebildet sein und sich insbesondere nach vorne verjüngen. Die Eingriffsfläche der Spannhülse ist dann korrespondierend dazu ausgebildet.

Eine axiale Positionierung des Spannrings auf einem axialen Vorsprung des Gehäuses oder in einer zentralen Öffnung des Gehäuses kann dadurch realisiert werden, dass der Spannring insbesondere mit einem ringförmig umlaufenden Absatz oder einer hinteren Stirnfläche flächig an einer vorderen Stirnfläche des Gehäuses anliegt.

Die Betätigungseinheit kann eine Zugstange aufweisen, welche den Grundkörper und/oder den Spannring axial durchsetzt und an ihrem vorderen Ende mit der Spannhülse axialfest verbunden ist. Die Zugstange kann dabei die innere Öffnung des Spannrings bzw. eine Durchgangsbohrung des Grundkörpers axial durchsetzen und an ihrem rückseitigen Ende mit einem Spannkolben oder anderen Antriebsmitteln verbunden werden.

Die Betätigungseinheit kann ferner eine Spannscheibe umfassen, welche am vorderen Ende der Zugstange mit dieser verbunden, insbesondere auf diese aufgeschraubt ist und radial außenseitig in eine in der Spannhülse ausgebildete ringförmig umlaufende Nut eingreift. Dadurch kann eine axiale Bewegung der Zugstange radial nach außen auf die Spannhülse übertragen werden, so dass sich die Spannhülse in gleicher Weise wie die Zugstange axial bewegt.

Sowohl bei dem erfindungsgemäßen Spannzangenfutter, als auch bei dem erfindungsgemäßen Spannzangendorn kann die jeweilige Druckkammer in einen Hydraulikmittelzuführkanal münden, der an seiner von der Druckkammer fernen Seite durch eine in die Spannbohrung eingeschraubte Spannschraube verschlossen ist, wobei die Spannschraube mit einem im Hydraulikmittelzuführkanal angeordneten Spannkolben wirkverbunden ist, so dass der Spannkolben durch Drehen der Spannschraube und Erhöhung des Drucks in der Druckkammer verschiebbar ist. Die Spannbohrung kann sich dabei radial im Grundkörper oder in Umfangsrichtung um die Spannachse im Grundkörper erstrecken.

Ferner können Anschlagmittel vorgesehen sein, um ein zu spannendes Bauteil axial zu positionieren. Die Anschlagmittel können ein scheibenförmiges oder ein ringförmiges Anschlagelement mit einer nach vorne weisenden, ringförmig umlaufenden Anschlagfläche umfassen. Durch eine solche Anschlagfläche kann ein Bauteil, wenn es in die Spannhülse eingebracht wird oder auf die Spannhülse aufgeschoben wird, axial eindeutig und reproduzierbar positioniert werden.

Das Anschlagelement kann dabei an einer vorderen Stirnfläche des Grundkörpers befestigt sein, insbesondere am Grundkörper angeschraubt sein. Handelt es sich um ein Spannzangenfutter, so kann das Anschlagelement innerhalb der zentralen Öffnung angeordnet sein. Bevorzugt sind am Grundkörper mehrere, insbesondere drei über den Umfang verteilt angeordnete Befestigungsvorsprünge vorgesehen, die nach vorne in die zentrale Öffnung ragen. An diesen kann das Anschlagelement befestigt, insbesondere angeschraubt sein. Ein auf einfache Weise befestigtes, beispielsweise angeschraubtes Anschlagelement ermöglicht ein schnelles Auswechseln und kann damit auf unterschiedliche Bauteile schnell angepasst werden. Insbesondere in Kombination mit dem auf einfach Weise auswechselbaren Spannring kann dabei die erfindungsgemäßen Spanneinrichtungen schnell an andere Bauteile, insbesondere solche mit einem anderen Spanndurchmesser angepasst werden.

Für die weitere Ausgestaltung der Erfindung wird auf die Unteransprüche und auf die nachfolgende Beschreibung mehrerer Ausführungsbeispiele unter Bezugnahme auf die Zeichnung verwiesen. In der Zeichnung zeigen:
- Figur 1: eine erste Ausführungsform einer erfindungsgemäßen Spanneinrichtung in einer Längsschnittansicht;
- Figur 2: die Spanneinrichtung aus Figur 1 in einer teilweise geschnittenen Vorderansicht;
- Figur 3: eine zweite Ausführungsform einer erfindungsgemäßen Spanneinrichtung in einer Längsschnittansicht; und
- Figur 4: eine dritte Ausführungsform einer erfindungsgemäßen Spanneinrichtung in einer Längsschnittansicht.

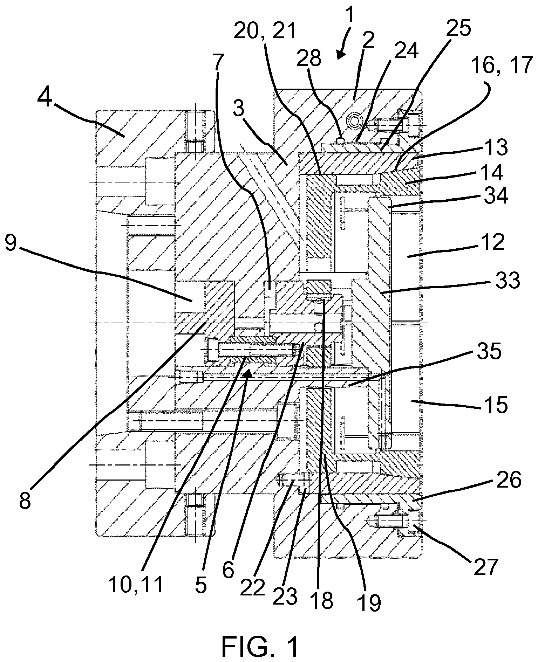

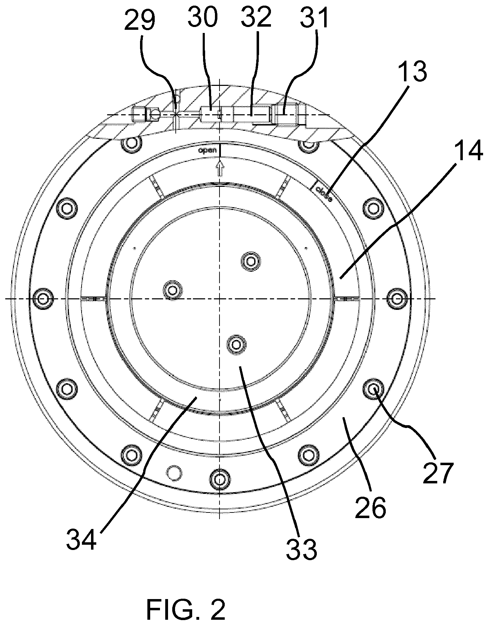

Die Figuren 1 und 2 zeigen eine als Spannzangenfutter 1 ausgebildete Spanneinrichtung gemäß der vorliegenden Erfindung. Das Spannzangenfutter 1 besitzt ein Gehäuse 2, welches eine Spannachse X definiert und einen Grundkörper 3 umfasst. An seiner Rückseite ist der Grundkörper 3 mit einem Aufnahmeflansch 4 verschraubt.

Das Spannzangenfutter 1 besitzt ferner eine Betätigungseinheit 5, die in dem Gehäuse 2 axial verstellbar gehalten ist. Konkret umfasst die Betätigungseinheit 5 einen vorderen Betätigungskolben 6, der in einer nach vorne offenen zentralen Aussparung 7 des Grundkörpers 3 axial verschiebbar gelagert ist und einen mit diesem verbundenen hinteren Betätigungskolben 8, welcher in einer nach hinten offenen zentralen Aussparung 9 des Grundkörpers 3 axial verschiebbar gelagert ist. Zwischen der nach vorne offenen zentralen Aussparung 7 und der nach hinten offenen zentralen Aussparung 9 erstrecken sich im Grundkörper 3 drei Durchgangsbohrungen 10, welche jeweils exzentrisch zur Spannachse X verlaufen. Die Durchgangsbohrungen 10 sind gleichmäßig um die Spannachse X verteilt angeordnet. Jede Durchgangsbohrung 10 wird von einem Verbindungselement 11 durchsetzt, welches den vorderen Betätigungskolben 6 und den hinteren Betätigungskolben 8 miteinander verbindet. Konkret erstreckt sich von hinten jeweils eine Schraube durch den hinteren Betätigungskolben 8 sowie jedes Verbindungselement 11 und ist in den vorderen Betätigungskolben 6 eingeschraubt. Durch die exzentrische Anordnung der Durchgangsbohrungen 10 relativ zur Spannachse X werden die beiden Betätigungskolben gegen ein Verdrehen um die Spannachse X gesichert.

Das Gehäuse 2 des Spannzangenfutters 1 besitzt eine zur Vorderseite hin offene zentrale Öffnung 12 mit einem kreisförmigen Querschnitt, in welcher ein in Umfangsrichtung geschlossener Spannring 13 fixiert ist. Der Spannring 13 liegt dabei flächig an der Rückwand der zentralen Öffnung 12 an. Radial innerhalb des Spannrings 13 ist eine nach Art einer Spannzange ausgebildete Spannhülse 14 angeordnet. Diese weist eine nach vorne offene zentrale Aufnahme 15 für ein zu spannendes Bauteil auf.

An der Außenseite der Spannhülse 14 ist eine sich nach hinten verjüngende konusförmige Eingriffsfläche 16 ausgebildet, die mit einer korrespondierenden konusförmigen Eingriffsfläche 17 des Spannrings 13 in Eingriff steht. Die Eingriffsflächen 16, 17 wirken derart zusammen, dass eine nach hinten gerichtete axiale Spannbewegung der Betätigungseinheit 5 und damit der Spannhülse 14 in eine radial nach innen gerichtete elastische Verformung der Spannhülse 14 umgesetzt wird, um ein in eine zentrale Aufnahme 19 der Spannhülse 14 eingesetztes Bauteil radial von außen zu spannen. Dazu ist die Betätigungseinheit 5, konkret der vordere Betätigungskolben 6, über eine Bajonettverbindung 18 mit einer scheibenartigen Rückwand 19 der Spannhülse 14 verbunden

In einem axial hinter der Eingriffsfläche 16 liegenden Bereich weist die Spannhülse 14 eine kreiszylindrische äußere Führungsfläche 20 auf. Dementsprechend ist an dem Spannring 13 eine korrespondierende innere Führungsfläche 21 ausgebildet. Dadurch wird die Spannhülse 14 relativ zum Spannring 13 radial zur Spannachse X geführt, so dass ein Blockieren oder Verkanten der Spannhülse 14 im Spannring 13 verhindert werden kann.

Ferner sind Sicherungsmittel vorgesehen, um den Spannring 13 gegen ein Verdrehen relativ zum Gehäuse 2 zu sichern. Diese umfassen vorliegend einen Sicherungsbolzen 22, welcher in einer Sackbohrung des Grundkörpers 3 befestigt ist und von hinten in die zentrale Öffnung 12 derart ragt, dass er in eine korrespondierende, nach hinten offene Aussparung 23 des Spannrings 13 eingreift. Dadurch wird der Spannring 13 formschlüssig gegen ein Verdrehen im Gehäuse 2 gesichert.

Der Außendurchmesser des Spannrings 13 ist dabei geringfügig kleiner als der Innendurchmesser der zentralen Öffnung 12. Um den Spannring 13 lösbar am Gehäuse 2 zu fixieren, sind hydraulische Dehnspannmittel vorgesehen. Diese umfassen vorliegend eine mit einem Hydraulikmittel beaufschlagbare Druckkammer 24, welche in dem Gehäuse 2 ausgebildet ist und die zentrale Öffnung 12 ringförmig umgibt. Zwischen der zentralen Öffnung 12 und der Druckkammer 24 ist eine dünne Wandung 25 vorgesehen, welche durch Erhöhung des Drucks in der Druckkammer 24 radial nach innen verformt werden kann, um den Spannring 13 kraftschlüssig in der zentralen Öffnung 12 zu fixieren. Die dünne Wandung 25 wird vorliegend von einer flanschartigen Dehnbüchse 26 gebildet, welche die Druckkammer 24 radial nach innen begrenzt. Die Dehnbüchse 26 ist dabei in den Grundkörper 3 eingeschoben und mittels zwölf über den Umfang angeordneter Schrauben 27 mit dem Grundkörper 3 verschraubt. Im Grundkörper 3 sind im Bereich der Dehnbüchse 26 zwei ringförmig umlaufende Nuten 28 ausgebildet, in welche Dichtringe eingebracht werden können, um die Druckkammer 24 abzudichten.

Die Druckkammer 24 mündet, wie insbesondere in Figur 2 teilweise erkennbar ist, in einen Hydraulikmittelzuführkanal 29, der an seiner von der Drucckammer 24 fernen Seite durch eine in eine Spannbohrung 30 eingeschraubte Spannschraube 31 verschlossen ist. Die Spannschraube 31 ist dabei mit einem Hydraulikmittelzuführkanal 29 angeordneten Spannkolben 32 wirkverbunden, so dass der Spannkolben 32 durch Drehen der Spannschraube 31 unter Erhöhung des Drucks in der Druckkammer 24 verschiebbar ist. Vorliegend erstreckt sich die Spannbohrung 30 in Umfangsrichtung um die Spannachse X im Grundkörper 3.

Um ein Bauteil beim Einsetzen in die zentrale Aufnahme 15 der Spannhülse 14 axial exakt positionieren zu können, sind entsprechende Anschlagmittel vorgesehen. Diese umfassen vorliegend ein scheibenförmiges Anschlagelement 33, welches eine ringförmig umlaufende, nach vorne weisende Anschlagfläche 34 trägt. Das Anschlagelement 33 ist vorliegend an drei über den Umfang verteilt angeordnete, nach vorne in die zentrale Öffnung 12 ragende Befestigungsvorsprünge 35 angeschraubt. Die Befestigungsvorsprünge 35 durchgreifen dabei die scheibenartige Rückwand 19 der Spannhülse 14.

Das Spannzangenfutter 1 zeichnet sich vorliegend dadurch aus, dass der Spannring 13 und die Spannhülse 14 auf einfache Weise auswechselbar ist, wenn beispielsweise ein Bauteil mit einem anderen Spanndurchmesser gespannt werden soll. Dazu wird in einem ersten Schritt das Anschlagelement 33 demontiert, indem die drei über den Umfang verteilten Schrauben gelöst werden. Anschließend kann die Spannhülse 14 durch Drehen um die Spannachse X von der Betätigungseinheit 5 gelöst werden, wobei die Bajonettverbindung 18 gelöst wird. Die Spannhülse 14 kann dann nach vorne aus der zentralen Öffnung 12 herausgezogen werden.

Zum Wechseln des Spannrings 13 kann anschließend der Druck in der Druckkammer 24 durch Herausdrehen der Spannschraube 31 reduziert werden. Die dünne Wandung 25, welche vorliegend von der Dehnbüchse 26 gebildet wird, verformt sich dadurch radial nach außen. Dadurch entsteht eine Spielpassung zwischen der dünnen Wandung 25 und dem Spannring 13, so dass dieser ohne mechanischen Widerstand nach vorne aus der zentralen Öffnung 12 entnommen werden kann.

Das Einsetzen und Montieren von Spannring 13 und Spannhülse 14 erfolgt dann in umgekehrter Reihenfolge. Zunächst wird der Spannring 13 in die zentrale Öffnung 12 eingesetzt, bis er an der Rückwand der zentralen Öffnung 12 in Anlage kommt, wobei der Sicherungsbolzen 22 in der Aussparung 23 in Eingriff gebracht wird. In der Druckkammer 24 wird der Druck durch Eindrehen der Spannschraube 31 erhöht, so dass sich die dünne Wandung 25 radial nach innen verformt und der Spannring 13 in der zentralen Öffnung 12 kraftschlüssig fixiert wird. Im Anschluss daran kann die Spannhülse 14 in den Spannring 13 eingesetzt werden. Dazu wird sie zunächst einfach eingeschoben und anschließend um die Spannachse X verdreht, so dass die Bajonettverbindung 18 mit der Betätigungseinheit 5 geschlossen wird. Dadurch wird eine axialfeste Verbindung zwischen der Spannhülse 14 und der Betätigungseinheit 5, konkret mit dem vorderen Betätigungskolben 6 hergestellt. Abschließend wird noch das Arretierelement 33 an den Befestigungsvorsprüngen 35 verschraubt.

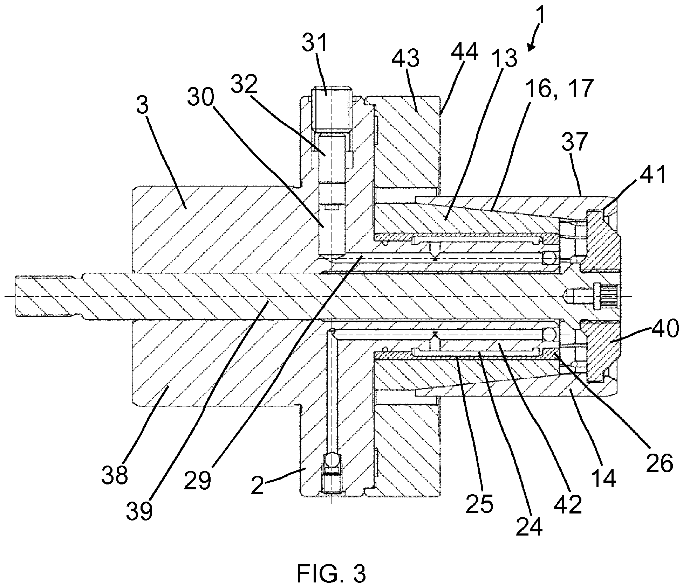

Die Figur 3 zeigt eine als Spannzangendorn 36 ausgebildete Spanneinrichtung gemäß der vorliegenden Erfindung. Diese unterscheidet sich grundsätzlich von dem Spannzangenfutter 1 dahingehend, dass keine zentrale Aufnahme 15 für ein zu spannendes Bauteil vorgesehen ist, sondern eine nach Art einer Spannzange ausgebildete Spannhülse 14 an Ihrer Außenseite eine Spannfläche 37 für ein zu spannendes Bauteil definiert. Mit anderen Worten soll die Einspannung eines Bauteils radial von innen erfolgen.

Der Spannzangendorn 36 umfasst ein eine Spannachse X definierendes Gehäuse 2 mit einem Grundkörper 3. Der Grundkörper 3 besitzt in seinem rückseitigen Endabschnitt einen Zylinderschaft 38 zur Aufnahme in einem Grundfutter.

Ferner umfasst der Spannzangendorn 36 eine Betätigungseinheit 5, welche vorliegend eine Zugstange 39 aufweist, die den Grundkörper 3 axial vollständig durchsetzt. An ihrem vorderen Ende ist die Zugstange 39 mit der Spannhülse 14 axialfest verbunden. Konkret ist dazu am vorderen Ende der Zugstange 39 eine Spannscheibe 40 auf diese aufgeschraubt, die radial außenseitig in eine in der Spannhülse 14 ausgebildete ringförmig umlaufende Nut 41 eingreift.

An der Innenseite der Spannhülse 14 ist eine sich nach vorne verjüngende konusförmige Eingriffsfläche 16 ausgebildet. Diese steht in Eingriff mit einer korrespondierenden Eingriffsfläche 17 eines Spannrings 13, welcher an einem vorderen, dornartigen Vorsprung 42 des Gehäuse 2 fixiert ist. Die beiden Eingriffsflächen 16, 17 wirken dabei derart zusammen, dass eine nach hinten gerichtete axiale Spannbewegung der Zugstange 39 und damit der Spannhülse 14 in eine radial nach außen gerichtete elastische Verformung der Spannhülse 14 umgesetzt wird, so dass ein auf diese aufgeschobenes Bauteil von innen gespannt werden kann.

Der Spannring 13 ist dabei lösbar an dem zentralen, dornartigen Vorsprung 42 des Gehäuses 2 befestigt. Konkret sind dazu hydraulische Dehnspannmittel vorgesehen. Diese umfassen vorliegend eine mit einem Hydraulikmittel beaufschlagbare Druckkammer 24, welche in dem zentralen, dornartigen Vorsprung 42 ringförmig umlaufend ausgebildet ist. Zwischen der Umfangsfläche des zentralen Vorsprungs 42 und der Druckkammer 24 ist eine dünne Wandung 25 vorgesehen, die durch eine Erhöhung des Drucks in der Druckkammer 24 elastisch radial nach außen verformbar ist, um den Spannring 13 auf den zentralen, dornartigen Vorsprung 42 von innen kraftschlüssig zu fixieren.

Konkret umfassen die hydraulischen Dehnspannmittel eine auf den Grundkörper 3 aufgeschobene Dehnbüchse 26, welche die Druckkammer 24 radial nach außen begrenzt und die dünne Wandung 25 bildet. Die Dehnbüchse 26 ist vorliegend mit dem Grundkörper 3 verlötet. Dadurch wird eine zuverlässige Abdichtung der Druckkammer 24 auch bei hohen Drücken gewährleistet.

In ähnlicher Weise wie bei dem bereits erläuterten Spannzangenfutter 1 mündet die Druckkammer 24 in einen Hydraulikmittelzuführkanal 29, der an seiner von der Druckkammer 24 fernen Seite durch eine in eine Spannbohrung 30 eingeschraubte Spannschraube 31 verschlossen ist. Die Spannschraube 31 ist dabei mit einem im Hydraulikmittelzuführkanal 29 angeordneten Spannkolben 32 wirkverbunden. Durch Drehen der Spannschraube 31 kann der Spannkolben 32 im Hydraulikmittelzuführkanal unter Erhöhung des Drucks in der Druckkammer 24 verschoben werden. Vorliegend verläuft die Spannbohrung 30 radial im Grundkörper 3.

Ferner sind Anschlagmittel vorgesehen, welche vorliegend ein ringförmiges Anschlagelement 43 umfassen. Dieses ist an dem Grundkörper 3 angeschraubt und besitzt an seiner vorderen Stirnseite eine ringförmig umlaufende Anschlagfläche 44. Auf diese Weise kann ein zu spannendes Bauteil axial eindeutig positioniert werden.

Der dargestellte Spannzangendorn 36 ermöglicht ein schnelles Auswechseln der entsprechenden Komponenten, wenn beispielsweise ein Bauteil mit einem anderen Durchmesser gespannt werden soll. Dazu kann die Spannscheibe 40 zunächst von dem vorderen Ende der Zugstange 39 abgeschraubt werden. Damit können die Spannscheibe 40 und gleichzeitig die Spannhülse 14 entnommen werden. Anschließend kann durch Herausdrehen der Spannschraube 31 der Druck in der Druckkammer 24 reduziert werden, wodurch sich die dünne Wandung 25 radial nach innen verformt. Damit entsteht zwischen dem Spannring 13 und der dünnen Wandung 25 eine Spielpassung, so dass der Spannring 13 auf einfache Weise vom dornartigen Vorsprung 42 des Gehäuses 2 entnommen werden kann.

Anschließend kann ein anderer geeigneter Spannring 13 auf den dornartigen Vorsprung 42 des Gehäuses 2 aufgesetzt werden. Dabei wird der Spannring 13 durch Anlage an einer Stirnfläche des Grundkörpers 3 axial positioniert. Die Spannschraube 31 wird dann im Anschluss eingedreht, so dass der Druck in der Druckkammer 24 erhöht wird. Dadurch verformt sich die dünne Wandung 25 radial nach außen, so dass die aufgesetzte Spannscheibe 13 kraftschlüssig am Gehäuse 2 fixiert wird. Anschließend kann die zu verwendende Spannhülse 14 mit der in der ringförmig umlaufenden Nut 41 angeordneten Spannscheibe 40 aufgesetzt werden. Die Spannscheibe 40 wird dabei auf das vordere Ende der Zugstange 39 aufgeschraubt. Auf diese Weise ist eine einfach und schnelle Anpassung des Spannzangendorns 36 an Bauteile mit unterschiedlichen Spanndurchmessern möglich. Prinzipiell ist es auch möglich, die Spannscheibe 40, die Zugstange 39 und die Spannhülse 14 als eine Baueinheit zu wechseln.

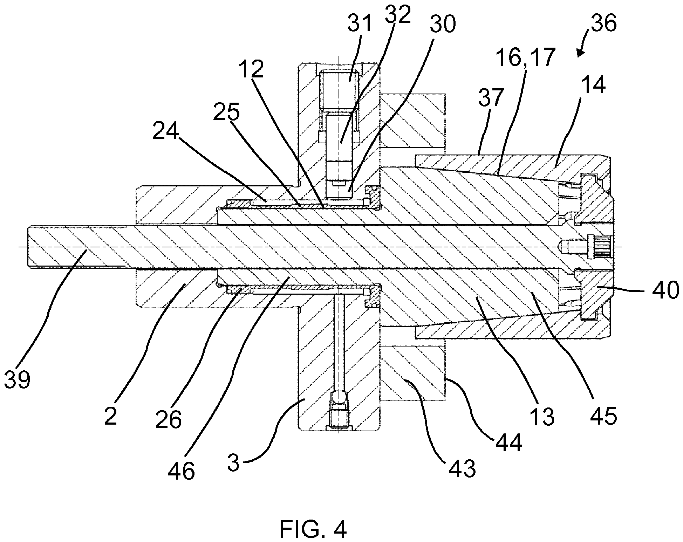

Die Figur 4 zeigt eine weitere Ausführungsform einer als Spannzangendorn 36 ausgebildeten erfindungsgemäßen Spanneinrichtung. Dieser Spannzangendorn 36 unterscheidet sich von dem in der Figur 3 dargestellten Spannzangendorn dadurch, dass die Druckkammer 24 nicht direkt radial innerhalb der Eingriffsflächen 16, 17 angeordnet ist, d.h. im axialen Bereich der Eingriffsflächen 16, 17 liegt, sondern axial versetzt dazu angeordnet ist. Konkret besitzt der dornartig ausgebildete Spannring 13 einen vorderen Eingriffsabschnitt 45, an welchem die Eingriffsfläche 17 ausgebildet ist, und einen hinteren Befestigungsabschnitt 46, in welchem der Spannring 13 am Gehäuse 2 befestigt wird. Dementsprechend weist das Gehäuse 2 einen zu einer Vorderseite offene zentrale Öffnung 12 auf. Die hydraulischen Dehnspannmittel umfassen somit, ähnlich wie bei dem Spannzangenfutter der Figuren 1 und 2, eine mit einem Hydraulikmittel beaufschlagbare Druckkammer 24, welche die zentrale Öffnung 12 ringförmig umgibt. Die dünne Wandung 25 ist zwischen der zentralen Öffnung 12 und der Druckkammer 24 vorgesehen und wird durch eine mit dem Grundkörper 3 verlötete Dehnbüchse 26 gebildet. Mit anderen Worten wird der Spannring 13 mit seinem Befestigungsabschnitt 46 von außen kraftschlüssig im Gehäuse fixiert.

Auch diese Ausführungsform ermöglicht ein einfaches Auswechseln der Spannhülse 14 und des Spannrings 13, um verschiedene Bauteile mit unterschiedlichen Spanndurchmessern spannen zu können. Dabei können die Spannhülse 14, der Spannring 13 und die Zugstange 39 mit der Spannscheibe 40 als eine Baueinheit entnommen bzw. eingesetzt werden.

### Bezugszeichenliste

- 1: Spannzangenfutter
- 2: Gehäuse
- 3: Grundkörper
- 4: Aufnahmeflansch
- 5: Betätigungseinheit
- 6: vorderer Betätigungskolben
- 7: nach vorne offene zentrale Aussparung
- 8: hinterer Betätigungskolben
- 9: nach hinten offene zentrale Aussparung
- 10: Durchgangsbohrung
- 11: Verbindungselement
- 12: zentrale Öffnung
- 13: Spannring
- 14: Spannhülse
- 15: zentrale Aufnahme
- 16: Eingriffsfläche
- 17: Eingriffsfläche
- 18: Bajonettverbindung
- 19: scheibenartige Rückwand
- 20: äußere Führungsfläche
- 21: innere Führungsfläche
- 22: Sicherungsbolzen
- 23: Aussparung
- 24: Druckkammer
- 25: dünne Wandung
- 26: Dehnbüchse
- 27: Schraube
- 28: Nut
- 29: Hydraulikmittelzuführkanal
- 30: Spannbohrung
- 31: Spannschraube
- 32: Spannkolben
- 33: scheibenförmiges Anschlagelement
- 34: Anschlagfläche
- 35: Befestigungsvorsprung
- 36: Spannzangendorn
- 37: Spannfläche
- 38: Zylinderschaft
- 39: Zugstange
- 40: Spannscheibe
- 41: Nut
- 42: dornartiger Vorsprung
- 43: ringförmiges Anschlagelement
- 44: Anschlagfläche
- 45: Eingriffsabschnitt
- 46: Befestigungsabschnitt
- X: Spannachse

## Patentansprüche

1. Spanneinrichtung, ausgebildet als Spannzangenfutter (1), mit
einem eine Spannachse (X) definierenden Gehäuse (2) mit einem Grundkörper (3),
einer Betätigungseinheit (5), die in dem Gehäuse (2) axial verstellbar gehalten ist,
einer nach Art einer Spannzange ausgebildeten Spannhülse (14), die an der Betätigungseinheit (5) gehalten ist, um mit dieser axial verstellt zu werden, und die eine zu einer Vorderseite des Gehäuses (2) offene zentrale Aufnahme (15) für ein zu spannendes Bauteil aufweist, und
einem in Umfangsrichtung geschlossenen Spannring (13), welcher am Gehäuse (2) fixiert ist,
wobei an der Außenseite der Spannhülse (14) und der Innenseite des Spannrings (13) zueinander korrespondierende Eingriffsflächen (16, 17) ausgebildet sind, die miteinander in Eingriff stehen und zusammenwirken, um eine insbesondere nach hinten gerichtete axiale Spannbewegung der Betätigungseinheit (5) und damit der Spannhülse (14) in eine radial nach innen gerichtete elastische Verformung der Spannhülse (14) umzusetzen, um ein Bauteil zu spannen,
wobei hydraulische Dehnspannmittel vorgesehen sind, welche ausgebildet und geeignet sind, den Spannring (13) lösbar am Gehäuse (2) zu fixieren,
**dadurch gekennzeichnet, dass** das Gehäuse (2) eine zu einer Vorderseite offene zentrale Öffnung (12) aufweist, und die hydraulischen Dehnspannmittel eine mit einem Hydraulikmittel beaufschlagbare Druckkammer (24) umfassen, welche in dem Gehäuse (2) ausgebildet ist und die zentrale Öffnung (12) ringförmig umgibt oder über den Umfang verteilt mehrere Druckkammerabschnitte aufweist, wobei zwischen der zentralen Öffnung (12) und der Druckkammer (24) eine dünne Wandung (25) vorgesehen ist, die durch eine Erhöhung des Drucks in der Druckkammer (24) elastisch radial nach innen verformbar ist, um den Spannring (13) in der zentralen Öffnung (12) kraftschlüssig zu fixieren.

2. Spanneinrichtung nach Anspruch 1, **dadurch gekennzeichnet, dass** die hydraulischen Dehnspannmittel eine in den Grundkörper (3) eingesetzte oder auf den Grundkörper (3) aufgeschobene Dehnbüchse (26) umfassen, welche die Druckkammer (24) radial nach innen begrenzt und die dünne Wandung (25) bildet.

3. Spanneinrichtung nach Anspruch 2, **dadurch gekennzeichnet, dass** sich die Dehnbüchse (26) ausgehend von der vorderen Stirnfläche des Grundkörpers (3) in diesen erstreckt, und/oder dass die Dehnbüchse (26) flanschartig ausgebildet ist und insbesondere mittels mehrerer über den Umfang angeordneter Schrauben (27) mit dem Grundkörper (3) verschraubt ist, und/oder dass die Druckkammer (24) mittels geeigneter Dichtmittel, insbesondere mittels Dichtringen, die bevorzugt in im Grundkörper (3) ausgebildeten Nuten (28) verlaufen, abgedichtet ist.

4. Spanneinrichtung nach einem der vorherigen Ansprüche, **dadurch gekennzeichnet, dass** die Eingriffsfläche (17) des Spannrings (13) konusförmig ausgebildet ist und sich insbesondere nach hinten verjüngt und die Eingriffsfläche (16) der Spannhülse (14) dazu korrespondierend ausgebildet ist, und/oder dass die Spannhülse (14) insbesondere in einem axial hinter der Eingriffsfläche (16) liegenden Bereich eine kreiszylindrische äußere Führungsfläche (20) und der Spannring (13) eine korrespondierende innere Führungsfläche (21) aufweist, um die Spannhülse (14) relativ zum Spannring (13) radial zur Spannachse (X) zu führen.

5. Spanneinrichtung nach einem der vorherigen Ansprüche, **dadurch gekennzeichnet, dass** die Betätigungseinheit (5) mindestens einen Betätigungskolben umfasst, welcher axial verschiebbar in einer zentralen Aussparung des Grundkörpers (3) gelagert ist, wobei, insbesondere, die Betätigungseinheit (5) einen vorderen Betätigungskolben (6), der in einer nach vorne offenen zentralen Aussparung (7) des Grundkörpers (3) axial verschiebbar gelagert ist, und einen mit diesem verbundenen hinteren Betätigungskolben (8) umfasst, welcher in einer nach hinten offenen zentralen Aussparung (9) des Grundkörpers (3) axial verschiebbar gelagert ist, wobei, bevorzugt, der vordere Betätigungskolben (6) und der hintere Betätigungskolben (8) über mindestens ein Verbindungselement (11) miteinander verbunden, insbesondere verschraubt sind, wobei jedes Verbindungelement (11) eine Durchgangsbohrung (10) des Grundkörpers (3) durchsetzt, wobei, besonders bevorzugt, die Durchgangsbohrung(en) (10) exzentrisch zur Spannachse (X) verläuft/verlaufen.

6. Spanneinrichtung nach einem der vorherigen Ansprüche, **dadurch gekennzeichnet, dass** die Betätigungseinheit (5) über eine Bajonettverbindung (18) mit der Spannhülse (14), insbesondere mit einer scheibenartigen Rückwand (19) der Spannhülse (14) verbunden ist, und/oder dass Sicherungsmittel vorgesehen sind, um den Spannring (13) gegen ein Verdrehen relativ zum Gehäuse (2) zu sichern, wobei, insbesondere, die Sicherungsmittel einen Sicherungsbolzen (22) umfassen, welcher am Grundkörper (3) befestigt ist und in die zentrale Öffnung (12) derart ragt, dass er in eine korrespondierende, nach hinten offene Aussparung (9) des Spannrings (13) eingreifen kann.

7. Spanneinrichtung, ausgebildet als Spannzangendorn (36), mit
einem eine Spannachse (X) definierenden Gehäuse (2) mit einem Grundkörper (3),
einer Betätigungseinheit (5), die in dem Gehäuse (2) axial verstellbar gehalten ist,
einer nach Art einer Spannzange ausgebildeten Spannhülse (14), die an der Betätigungseinheit (5) gehalten ist, um mit dieser axial verstellt zu werden, und an der Außenseite eine Spannfläche (37) für ein von einer Vorderseite auf die Spannhülse (14) aufzusetzendes, zu spannendes Bauteil definiert,
einem in Umfangsrichtung geschlossenen Spannring (13), welcher am Gehäuse (2) fixiert ist,
wobei an der Innenseite der Spannhülse (14) und der Außenseite des Spannrings (13) zueinander korrespondierende Eingriffsflächen (16, 17) ausgebildet sind, die miteinander in Eingriff stehen und zusammenwirken, um eine insbesondere nach hinten gerichtete axiale Spannbewegung der Betätigungseinheit (5) und damit der Spannhülse (14) in eine radial nach außen gerichtete elastische Verformung der Spannhülse (14) umzusetzen, um ein Bauteil zu spannen,
wobei hydraulische Dehnspannmittel vorgesehen sind, welche ausgebildet und geeignet sind, den Spannring (13) lösbar am Gehäuse (2) zu fixieren,
**dadurch gekennzeichnet, dass** das Gehäuse (2) einen zentralen, dornartigen Vorsprung (42) aufweist und die hydraulischen Dehnspannmittel eine mit einem Hydraulikmittel beaufschlagbare Druckkammer (24) umfassen, welche in dem zentralen Vorsprung ringförmig umlaufend ausgebildet ist oder über den Umfang verteilt mehrere Druckkammerabschnitte aufweist, wobei zwischen der Umfangsfläche des zentralen Vorsprungs und der Druckkammer (24) eine dünne Wandung (25) vorgesehen ist, die durch eine Erhöhung des Drucks in der Druckkammer (24) elastisch radial nach außen verformbar ist, um den Spannring (13) auf dem zentralen Vorsprung von innen kraftschlüssig zu fixieren.

8. Spanneinrichtung nach Anspruch 7, **dadurch gekennzeichnet, dass** die hydraulischen Dehnspannmittel eine auf den Grundkörper (3) aufgeschobene Dehnbüchse (26) umfassen, welche die Druckkammer (24) radial nach außen begrenzt und die dünne Wandung (25) bildet, wobei die Dehnbüchse (26) mit dem Grundkörper (3) insbesondere stoffschlüssig verbunden, bevorzugt verlötet oder verschweißt ist.

9. Spanneinrichtung, ausgebildet als Spannzangendorn (36), mit
einem eine Spannachse (X) definierenden Gehäuse (2) mit einem Grundkörper (3),
einer Betätigungseinheit (5), die in dem Gehäuse (2) axial verstellbar gehalten ist,
einer nach Art einer Spannzange ausgebildeten Spannhülse (14), die an der Betätigungseinheit (5) gehalten ist, um mit dieser axial verstellt zu werden, und an der Außenseite eine Spannfläche (37) für ein von einer Vorderseite auf die Spannhülse (14) aufzusetzendes, zu spannendes Bauteil definiert,
einem in Umfangsrichtung geschlossenen Spannring (13), welcher am Gehäuse (2) fixiert ist,
wobei an der Innenseite der Spannhülse (14) und der Außenseite des Spannrings (13) zueinander korrespondierende Eingriffsflächen (16, 17) ausgebildet sind, die miteinander in Eingriff stehen und zusammenwirken, um eine insbesondere nach hinten gerichtete axiale Spannbewegung der Betätigungseinheit (5) und damit der Spannhülse (14) in eine radial nach außen gerichtete elastische Verformung der Spannhülse (14) umzusetzen, um ein Bauteil zu spannen,
wobei hydraulische Dehnspannmittel vorgesehen sind, welche ausgebildet und geeignet sind, den Spannring (13) lösbar am Gehäuse (2) zu fixieren,
**dadurch gekennzeichnet, dass** der Spannring (13) einen vorderen Eingriffsabschnitt (45), an welchem die Eingriffsfläche (16, 17) ausgebildet ist, und einen hinteren Befestigungsabschnitt (46) aufweist, **dass** das Gehäuse (2) eine zu einer Vorderseite offene zentrale Öffnung (12) aufweist, und **dass** die hydraulischen Dehnspannmittel eine mit einem Hydraulikmittel beaufschlagbare Druckkammer (24) umfassen, welche die zentrale Öffnung (12) ringförmig umgibt oder über den Umfang verteilt mehrere Druckkammerabschnitte aufweist, wobei zwischen der zentralen Öffnung (12) und der Druckkammer (24) eine dünne Wandung (25) vorgesehen ist, die durch eine Erhöhung des Drucks in der Druckkammer (24) elastisch radial nach innen verformbar ist, um den Spannring (13) in der zentralen Öffnung (12) kraftschlüssig zu fixieren.

10. Spanneinrichtung nach Anspruch 9, **dadurch gekennzeichnet, dass** die hydraulischen Dehnspannmittel eine von einer vorderen Stirnseite in den Grundkörper (3) eingesetzte Dehnbüchse (26) umfassen, welche die Drucckammer (24) radial nach innen begrenzt und die dünne Wandung (25) bildet, wobei die Dehnbüchse (26) mit dem Grundkörper (3) insbesondere stoffschlüssig verbunden, bevorzugt verlötet oder verschweißt ist.

11. Spanneinrichtung nach einem der Ansprüche 7 bis 10, **dadurch gekennzeichnet, dass** die Eingriffsfläche (17) des Spannrings (13) konusförmig ausgebildet ist und sich insbesondere nach vorne verjüngt und die Eingriffsfläche (16) der Spannhülse (14) dazu korrespondierend ausgebildet ist, und/oder dass die Betätigungseinheit (5) eine Zugstange (39) aufweist, welche den Grundkörper (3) und/oder den Spannring (13) axial durchsetzt und an ihrem vorderen Ende mit der Spannhülse (14) axialfest verbunden ist, wobei, insbesondere, die Betätigungseinheit (5) eine Spannscheibe (40) umfasst, welche am vorderen Ende der Zugstange (39) mit dieser verbunden, bevorzugt auf diese aufgeschraubt, ist und radial außenseitig in eine in der Spannhülse (14) ausgebildete ringförmig umlaufende Nut (41) eingreift.

12. Spanneinrichtung nach einem der vorherigen Ansprüche, **dadurch gekennzeichnet, dass** die Druckkammer (24) in einen Hydraulikmittelzuführkanal (29) mündet, der an seiner von der Druckkammer (24) fernen Seite durch eine in eine Spannbohrung (30) eingeschraubte Spannschraube (31) verschlossen ist, wobei die Spannschraube (31) mit einem im Hydraulikmittelzuführkanal (29) angeordneten Spannkolben (32) wirkverbunden ist, so dass der Spannkolben (32) durch Drehen der Spannschraube (31) unter Erhöhung des Drucks in der Druckkammer (24) verschiebbar ist, wobei, insbesondere, sich die Spannbohrung (30) radial im Grundkörper (3) oder in Umfangsrichtung um die Spannachse (X) im Grundkörper (3) erstreckt.

13. Spanneinrichtung nach einem der vorherigen Ansprüche, **dadurch gekennzeichnet, dass** Anschlagmittel vorgesehen sind, um ein zu spannendes Bauteil axial zu positionieren.

14. Spanneinrichtung nach Anspruch 13, **dadurch gekennzeichnet, dass** die Anschlagmittel ringförmiges oder scheibenförmiges Anschlagelement (33, 43) mit einer nach vorne weisenden, ringförmig umlaufenden Anschlagfläche (34, 44) umfassen, wobei, insbesondere, das Anschlagelement (33, 43) an einer vorderen Stirnfläche des Grundkörpers (3) befestigt ist, insbesondere an den Grundkörper (3) angeschraubt ist, wobei, bevorzugt, die Spanneinrichtung nach Anspruch 1 ausgebildet ist und das Anschlagelement (33) innerhalb der zentralen Öffnung (12) angeordnet ist, wobei, besonders bevorzugt, das Anschlagelement (33) an mehreren, insbesondere an drei über den Umfang verteilt angeordneten, nach vorne in die zentrale Öffnung (12) ragenden Befestigungsvorsprüngen (35) des Grundkörpers (3) befestigt ist, insbesondere angeschraubt ist.

## Claims

1. Clamping device, designed as a collet chuck (1), with
a housing (2) defining a clamping axis (X) with a base body (3),
an actuating unit (5) which is held axially adjustable in the housing (2),
a clamping sleeve (14) in the form of a collet chuck, which is held on the actuating unit (5) in order to be adjusted axially with the latter and which has a central receptacle (15), open towards a front side of the housing (2), for a component to be clamped, and
a clamping ring (13) closed in the circumferential direction, which is fixed to the housing (2),
wherein engagement surfaces (16, 17) corresponding to one another are formed on the outside of the clamping sleeve (14) and the inside of the clamping ring (13), which surfaces engage with one another and interact in order to convert an axial clamping movement of the actuating unit (5) and thus of the clamping sleeve (14), in particular directed towards the rear, into a radially inwardly directed elastic deformation of the clamping sleeve (14) in order to clamp a component,
wherein hydraulic expansion clamping means are provided, which are designed and suitable for releasably fixing the clamping ring (13) to the housing (2), **characterized in that** the housing (2) has a central opening (12) open to a front side, and the hydraulic expansion clamping means comprise a pressure chamber (24) formed in the housing (2) which can be acted upon by a hydraulic medium, and surrounds the central opening (12) in an annular manner or has a plurality of pressure chamber sections distributed over the circumference, a thin wall (25) being provided between the central opening (12) and the pressure chamber (24), which wall can be elastically deformed radially inwards by increasing the pressure in the pressure chamber (24) in order to fix the clamping ring (13) in the central opening (12) in a force-locking manner.

2. Clamping device according to claim 1, **characterized in that** the hydraulic expansion clamping means comprise an expansion sleeve (26) which is inserted into the base body (3) or pushed onto the base body (3) and which delimits the pressure chamber (24) radially inwards and forms the thin wall (25).

3. Clamping device according to claim 2, **characterized in that** the expansion sleeve (26) extends into the base body (3) starting from the front end face of the base body (3), and/or **in that** the expansion sleeve (26) is of flange-like design and is screwed to the base body (3), in particular by means of a plurality of screws (27) arranged around the circumference, and/or **in that** the pressure chamber (24) is sealed by means of suitable sealing means, in particular by means of sealing rings, which preferably extend in grooves (28) formed in the base body (3).

4. Clamping device according to one of the preceding claims, **characterized in that** the engagement surface (17) of the clamping ring (13) is conical in shape and tapers in particular towards the rear and the engagement surface (16) of the clamping sleeve (14) is designed to correspond thereto, and/or **in that** the clamping sleeve (14) has a circular cylindrical outer guide surface (20), in particular in a region located axially behind the engagement surface (16), and the clamping ring (13) has a corresponding inner guide surface (21) in order to guide the clamping sleeve (14) relative to the clamping ring (13) radially to the clamping axis (X).

5. Clamping device according to one of the preceding claims, **characterized in that** the actuating unit (5) comprises at least one actuating piston which is mounted axially displaceably in a central recess of the base body (3), wherein, in particular, the actuating unit (5) comprises a front actuating piston (6), which is mounted axially displaceably in a forwardly open central recess (7) of the base body (3), and a rear actuating piston (8) connected thereto, which is axially displaceably mounted in a rearwardly open central recess (9) of the base body (3), wherein, preferably, the front actuating piston (6) and the rear actuating piston (8) are connected to one another, in particular screwed together, via at least one connecting element (11), wherein each connecting element (11) passes through a through-hole (10) of the base body (3), wherein, particularly preferably, the through-hole(s) (10) runs/run eccentrically to the clamping axis (X).

6. Clamping device according to one of the preceding claims, **characterized in that** the actuating unit (5) is connected via a bayonet connection (18) to the clamping sleeve (14), in particular to a disc-like rear wall (19) of the clamping sleeve (14), and/or **in that** securing means are provided, in order to secure the clamping ring (13) against rotation relative to the housing (2), wherein, in particular, the securing means comprise a securing bolt (22) which is fastened to the base body (3) and projects into the central opening (12) in such a way that it can engage in a corresponding, rearwardly open recess (9) of the clamping ring (13).

7. Clamping device, designed as a collet mandrel (36), with
a housing (2) defining a clamping axis (X) with a base body (3),
an actuating unit (5) which is held axially adjustable in the housing (2),
a clamping sleeve (14) designed in the manner of a collet chuck, which is held on the actuating unit (5) in order to be axially adjusted with the latter, and defines on the outside a clamping surface (37) for a component to be clamped which is to be placed on the clamping sleeve (14) from a front side,
a clamping ring (13) closed in the circumferential direction, which is fixed to the housing (2),
wherein engagement surfaces (16, 17) corresponding to one another are formed on the inside of the clamping sleeve (14) and the outside of the clamping ring (13), which surfaces are in engagement with one another and interact in order to convert an axial clamping movement of the actuating unit (5) and thus of the clamping sleeve (14), in particular directed towards the rear, into a radially outwardly directed elastic deformation of the clamping sleeve (14) in order to clamp a component,
wherein hydraulic expansion clamping means are provided which are designed and suitable for releasably fixing the clamping ring (13) to the housing (2), **characterized in that** the housing (2) has a central, mandrel-like projection (42) and the hydraulic expansion clamping means comprise a pressure chamber (24) which can be acted upon by a hydraulic medium, and is formed in the central projection in an annular circumferential manner or a plurality of pressure chamber sections distributed over the circumference, a thin wall (25) being provided between the circumferential surface of the central projection and the pressure chamber (24), which wall can be elastically deformed radially outwards by increasing the pressure in the pressure chamber (24) in order to fix the clamping ring (13) on the central projection from the inside in a force-locking manner.

8. Clamping device according to claim 7, **characterized in that** the hydraulic expansion clamping means comprise an expansion sleeve (26) which is pushed onto the base body (3), delimits the pressure chamber (24) radially outwards and forms the thin wall (25), the expansion sleeve (26) being connected to the base body (3), in particular in a material-locking manner, preferably soldered or welded.

9. Clamping device, designed as a collet mandrel (36), with
a housing (2) defining a clamping axis (X) with a base body (3),
an actuating unit (5) which is held axially adjustable in the housing (2),
a clamping sleeve (14) designed in the manner of a collet chuck, which is held on the actuating unit (5) in order to be axially adjusted with the latter, and defines on the outside a clamping surface (37) for a component to be clamped which is to be placed on the clamping sleeve (14) from a front side,
a clamping ring (13) closed in the circumferential direction, which is fixed to the housing (2),
wherein engagement surfaces (16, 17) corresponding to one another are formed on the inside of the clamping sleeve (14) and the outside of the clamping ring (13), which surfaces are in engagement with one another and interact in order to convert an axial clamping movement of the actuating unit (5) and thus of the clamping sleeve (14), in particular directed towards the rear, into a radially outwardly directed elastic deformation of the clamping sleeve (14) in order to clamp a component,
wherein hydraulic expansion clamping means are provided, which are designed and suitable for releasably fixing the clamping ring (13) to the housing (2),
**characterized in that** the clamping ring (13) has a front engagement section (45), on which the engagement surface (16, 17) is formed, and a rear fastening section (46), **in that** the housing (2) has a central opening (12) which is open to a front side, and **in that** the hydraulic expansion clamping means comprise a pressure chamber (24) which can be acted upon by a hydraulic medium and which annularly surrounds the central opening (12) or has a plurality of pressure chamber sections distributed over the circumference, a thin wall (25) being provided between the central opening (12) and the pressure chamber (24), which wall can be elastically deformed radially inwards by increasing the pressure in the pressure chamber (24) in order to fix the clamping ring (13) in the central opening (12) in a force-locking manner.

10. Clamping device according to claim 9, **characterized in that** the hydraulic expansion clamping means comprise an expansion sleeve (26) inserted into the base body (3) from a front end face, which expansion sleeve delimits the pressure chamber (24) radially inwards and forms the thin wall (25), the expansion sleeve (26) being connected to the base body (3) in particular in a material-locking manner, preferably soldered or welded.

11. Clamping device according to one of claims 7 to 10, **characterized in that** the engagement surface (17) of the clamping ring (13) is conical in shape and in particular tapers towards the front and the engagement surface (16) of the clamping sleeve (14) is designed to correspond thereto, and/or **in that** the actuating unit (5) has a pull rod (39), which passes axially through the base body (3) and/or the clamping ring (13) and is axially fixedly connected at its front end to the clamping sleeve (14), wherein, in particular, the actuating unit (5) comprises a clamping disk (40) which is connected at the front end of the pull rod (39) to the latter, preferably screwed onto the latter, and engages radially on the outside in an annular circumferential groove (41) formed in the clamping sleeve (14).

12. Clamping device according to one of the preceding claims, **characterized in that** the pressure chamber (24) opens into a hydraulic medium supply channel (29) which is closed on its side remote from the pressure chamber (24) by a clamping screw (31) screwed into a clamping bore (30), wherein the clamping screw (31) is operatively connected to a clamping piston (32) arranged in the hydraulic fluid supply channel (29), so that the clamping piston (32) can be displaced by rotating the clamping screw (31) while increasing the pressure in the pressure chamber (24), wherein, in particular, the clamping bore (30) extends radially in the base body (3) or in the circumferential direction around the clamping axis (X) in the base body (3).

13. Clamping device according to one of the preceding claims, **characterized in that** stop means are provided in order to axially position a component to be clamped.

14. Clamping device according to claim 13, **characterized in that** the stop means comprise an annular or disc-shaped stop element (33, 43) with a forward-facing, annularly circumferential stop surface (34, 44), wherein, in particular, the stop element (33, 43) is fastened to a front end face of the base body (3), in particular is screwed to the base body (3), wherein, preferably, the clamping device is designed according to claim 1 and the stop element (33) is arranged within the central opening (12), wherein, particularly preferably, the stop element (33) is fastened, in particular screwed, to a plurality of fastening projections (35) of the base body (3), in particular to three fastening projections (35) which are arranged distributed over the circumference and project forwards into the central opening (12).

## Revendications

1. Dispositif de serrage, conçu comme mandrin à pince de serrage (1), avec
un boîtier (2) définissant un axe de serrage (X) avec un corps de base (3),
une unité d'actionnement (5) qui est maintenue dans le boîtier (2) de manière à pouvoir être déplacée axialement,
une douille de serrage (14) réalisée à la manière d'une pince de serrage, qui est maintenue sur l'unité d'actionnement (5) pour être déplacée axialement avec celle-ci, et qui présente un logement central (15) ouvert vers une face avant du boîtier (2) pour un composant à serrer, et
une bague de serrage (13) fermée dans le sens de la circonférence, qui est fixée au boîtier (2),
des surfaces d'engagement (16, 17) correspondant l'une à l'autre étant formées sur le côté extérieur de la douille de serrage (14) et sur le côté intérieur de la bague de serrage (13), lesquelles sont en prise l'une avec l'autre et coopèrent pour transformer un mouvement de serrage axial de l'unité d'actionnement (5) et donc de la douille de serrage (14), en particulier dirigé vers l'arrière, en une déformation élastique de la douille de serrage (14) dirigée radialement vers l'intérieur, afin de serrer un composant,
des moyens hydrauliques de serrage par extension étant prévus, lesquels sont conçus et adaptés pour fixer de manière amovible la bague de serrage (13) sur le boîtier (2), **caractérisé en ce que** le boîtier (2) présente une ouverture centrale (12) ouverte vers un côté avant, et les moyens hydrauliques de serrage par extension comprennent une chambre de pression (24) pouvant être alimentée en fluide hydraulique, qui est formée dans le boîtier (2) et qui entoure l'ouverture centrale (12) de manière annulaire ou qui présente plusieurs sections de chambre de pression réparties sur la périphérie, une paroi mince (25) étant prévue entre l'ouverture centrale (12) et la chambre de pression (24), laquelle peut être déformée de manière élastique radialement vers l'intérieur par une augmentation de la pression dans la chambre de pression (24) afin de fixer la bague de serrage (13) par adhérence dans l'ouverture centrale (12).

2. Dispositif de serrage selon la revendication 1, **caractérisé en ce que** les moyens hydrauliques de serrage par dilatation comprennent une douille de dilatation (26) insérée dans le corps de base (3) ou enfilée sur le corps de base (3), qui délimite la chambre de pression (24) radialement vers l'intérieur et forme la paroi mince (25).

3. Dispositif de serrage selon la revendication 2, **caractérisé en ce que** la douille de dilatation (26) s'étend dans le corps de base (3) en partant de la face frontale avant de ce dernier, et/ou **en ce que** la douille de dilatation (26) est réalisée en forme de bride et est vissée au corps de base (3) notamment au moyen de plusieurs vis (27) disposées sur la périphérie, et/ou **en ce que** la chambre de pression (24) est rendue étanche au moyen de moyens d'étanchéité appropriés, notamment au moyen de bagues d'étanchéité qui s'étendent de préférence dans des rainures (28) formées dans le corps de base (3).

4. Dispositif de serrage selon l'une des revendications précédentes, **caractérisé en ce que** la surface d'engagement (17) de la bague de serrage (13) est de forme conique et se rétrécit en particulier vers l'arrière, et la surface d'engagement (16) de la douille de serrage (14) est réalisée de manière correspondante à celle-ci, et/ou **en ce que** la douille de serrage (14) présente, en particulier dans une zone située axialement derrière la surface d'engrènement (16), une surface de guidage extérieure (20) cylindrique circulaire et la bague de serrage (13) une surface de guidage intérieure (21) correspondante, afin de guider la douille de serrage (14) par rapport à la bague de serrage (13) radialement par rapport à l'axe de serrage (X).

5. Dispositif de serrage selon l'une des revendications précédentes, **caractérisé en ce que** l'unité d'actionnement (5) comprend au moins un piston d'actionnement qui est logé de manière à pouvoir se déplacer axialement dans un évidement central du corps de base (3), dans lequel, en particulier, l'unité d'actionnement (5) comprend un piston d'actionnement avant (6) qui est logé de manière à pouvoir se déplacer axialement dans un évidement central (7) du corps de base (3) ouvert vers l'avant, et un piston d'actionnement arrière (8) relié à ce piston, qui est monté de manière à pouvoir se déplacer axialement dans un évidement central (9), ouvert vers l'arrière, du corps de base (3), dans lequel, de préférence, le piston d'actionnement avant (6) et le piston d'actionnement arrière (8) sont reliés entre eux, notamment par vissage, par l'intermédiaire d'au moins un élément de liaison (11), chaque élément de liaison (11) traversant un perçage traversant (10) du corps de base (3), dans lequel, de manière particulièrement préférée, le ou les perçages traversants (10) s'étendent de manière excentrée par rapport à l'axe de serrage (X).

6. Dispositif de serrage selon l'une des revendications précédentes, **caractérisé en ce que** l'unité d'actionnement (5) est reliée par une liaison à baïonnette (18) à la douille de serrage (14), en particulier à une paroi arrière (19) en forme de disque de la douille de serrage (14), et/ou **en ce que** des moyens de blocage sont prévus, pour empêcher la bague de serrage (13) de tourner par rapport au boîtier (2), dans lequel, en particulier, les moyens de sécurité comprennent un boulon de sécurité (22) qui est fixé au corps de base (3) et fait saillie dans l'ouverture centrale (12) de telle sorte qu'il peut s'engager dans un évidement correspondant (9), ouvert vers l'arrière, de la bague de serrage (13).

7. Dispositif de serrage, réalisé sous forme de mandrin de serrage (36), avec
un boîtier (2) définissant un axe de serrage (X) avec un corps de base (3),
une unité d'actionnement (5) qui est maintenue dans le boîtier (2) de manière à pouvoir être déplacée axialement,
une douille de serrage (14) réalisée à la manière d'une pince de serrage, qui est maintenue sur l'unité d'actionnement (5) pour être déplacée axialement avec celle-ci, et qui définit sur le côté extérieur une surface de serrage (37) pour un composant à serrer à partir d'un côté avant sur la douille de serrage (14),
une bague de serrage (13) fermée dans le sens de la circonférence, qui est fixée au boîtier (2),
des surfaces d'engagement (16, 17) correspondant l'une à l'autre étant formées sur le côté intérieur de la douille de serrage (14) et sur le côté extérieur de la bague de serrage (13), lesquelles sont en prise l'une avec l'autre et coopèrent pour transformer un mouvement de serrage axial de l'unité d'actionnement (5) et donc de la douille de serrage (14), en particulier dirigé vers l'arrière, en une déformation élastique de la douille de serrage (14) dirigée radialement vers l'extérieur, afin de serrer un composant,
des moyens hydrauliques de serrage par extension étant prévus, lesquels sont conçus et adaptés pour fixer de manière amovible la bague de serrage (13) sur le boîtier (2), **caractérisé en ce que** le boîtier (2) présente une saillie centrale (42) en forme de mandrin et les moyens hydrauliques de serrage par extension comprennent une chambre de pression (24) pouvant être alimentée en fluide hydraulique, qui est réalisée en forme d'anneau périphérique dans la saillie centrale ou qui présente plusieurs sections de chambre de pression réparties sur la périphérie, une paroi mince (25) étant prévue entre la surface périphérique de la saillie centrale et la chambre de pression (24), laquelle peut être déformée élastiquement radialement vers l'extérieur par une augmentation de la pression dans la chambre de pression (24), afin de fixer par adhérence de l'intérieur la bague de serrage (13) sur la saillie centrale.

8. Dispositif de serrage selon la revendication 7, **caractérisé en ce que** les moyens hydrauliques de serrage par dilatation comprennent une douille de dilatation (26) enfilée sur le corps de base (3), qui délimite la chambre de pression (24) radialement vers l'extérieur et forme la paroi mince (25), la douille de dilatation (26) étant reliée au corps de base (3) en particulier par liaison de matière, de préférence par brasage ou soudage.

9. Dispositif de serrage, réalisé sous forme de mandrin de serrage (36), avec
un boîtier (2) définissant un axe de serrage (X) avec un corps de base (3),
une unité d'actionnement (5) qui est maintenue dans le boîtier (2) de manière à pouvoir être déplacée axialement,
une douille de serrage (14) réalisée à la manière d'une pince de serrage, qui est maintenue sur l'unité d'actionnement (5) pour être déplacée axialement avec celle-ci, et qui définit sur le côté extérieur une surface de serrage (37) pour un composant à serrer à partir d'un côté avant sur la douille de serrage (14),
une bague de serrage (13) fermée dans le sens de la circonférence, qui est fixée au boîtier (2),
des surfaces d'engagement (16, 17) correspondant l'une à l'autre étant formées sur le côté intérieur de la douille de serrage (14) et sur le côté extérieur de la bague de serrage (13), lesquelles sont en prise l'une avec l'autre et coopèrent pour transformer un mouvement de serrage axial de l'unité d'actionnement (5) et donc de la douille de serrage (14), en particulier dirigé vers l'arrière, en une déformation élastique de la douille de serrage (14) dirigée radialement vers l'extérieur, afin de serrer un composant,
des moyens de serrage hydraulique extensibles étant prévus, lesquels sont conçus et adaptés pour fixer de manière amovible la bague de serrage (13) sur le boîtier (2),
**caractérisé en ce que** la bague de serrage (13) présente une section d'engagement avant (45), sur laquelle est formée la surface d'engagement (16, 17), et une section de fixation arrière (46), **en ce que** le boîtier (2) présente une ouverture centrale (12) ouverte vers un côté avant, et **en ce que** les moyens de serrage extensibles hydrauliques comprennent une chambre de pression (24) pouvant être alimentée par un fluide hydraulique, qui entoure l'ouverture centrale (12) de manière annulaire ou qui présente plusieurs sections de chambre de pression réparties sur la périphérie, une paroi mince (25) étant prévue entre l'ouverture centrale (12) et la chambre de pression (24), laquelle peut être déformée élastiquement radialement vers l'intérieur par une augmentation de la pression dans la chambre de pression (24), afin de fixer la bague de serrage (13) par adhérence dans l'ouverture centrale (12).

10. Dispositif de serrage selon la revendication 9, **caractérisé en ce que** les moyens hydrauliques de serrage par dilatation comprennent une douille de dilatation (26) insérée dans le corps de base (3) à partir d'un côté frontal avant, qui délimite la chambre de pression (24) radialement vers l'intérieur et forme la paroi mince (25), la douille de dilatation (26) étant reliée au corps de base (3) en particulier par liaison de matière, de préférence par brasage ou soudage.

11. Dispositif de serrage selon l'une des revendications 7 à 10, **caractérisé en ce que** la surface d'engagement (17) de la bague de serrage (13) est de forme conique et se rétrécit en particulier vers l'avant et la surface d'engagement (16) de la douille de serrage (14) est réalisée de manière correspondante à celle-ci, et/ou **en ce que** l'unité d'actionnement (5) présente une tige de traction (39), qui traverse axialement le corps de base (3) et/ou la bague de serrage (13) et qui est reliée de manière axialement fixe à son extrémité avant à la douille de serrage (14), l'unité d'actionnement (5) comprenant, en particulier, un disque de serrage (40) qui est relié à l'extrémité avant de la tige de traction (39), de préférence vissé sur celle-ci, et qui s'engage radialement côté extérieur dans une rainure (41) périphérique annulaire formée dans la douille de serrage (14).

12. Dispositif de serrage selon l'une des revendications précédentes, **caractérisé en ce que** la chambre de pression (24) débouche dans un canal d'alimentation en fluide hydraulique (29), qui est fermé sur son côté éloigné de la chambre de pression (24) par une vis de serrage (31) vissée dans un alésage de serrage (30), la vis de serrage (31) étant en liaison active avec un piston de serrage (32) disposé dans le canal d'amenée de fluide hydraulique (29), de sorte que le piston de serrage (32) peut être déplacé par rotation de la vis de serrage (31) en augmentant la pression dans la chambre de pression (24), l'alésage de serrage (30) s'étendant, en particulier, radialement dans le corps de base (3) ou dans la direction circonférentielle autour de l'axe de serrage (X) dans le corps de base (3).

13. Dispositif de serrage selon l'une des revendications précédentes, **caractérisé en ce que** des moyens de butée sont prévus pour positionner axialement un composant à serrer.

14. Dispositif de serrage selon la revendication 13, **caractérisé en ce que** les moyens de butée comprennent un élément de butée (33, 43) annulaire ou en forme de disque avec une surface de butée (34, 44) périphérique annulaire dirigée vers l'avant, l'élément de butée (33, 43) étant, en particulier, fixé sur une surface frontale avant du corps de base (3), en particulier vissé sur le corps de base (3), où, de préférence, le dispositif de serrage est réalisé selon la revendication 1 et l'élément de butée (33) est disposé à l'intérieur de l'ouverture centrale (12), dans lequel, de manière particulièrement préférée, l'élément de butée (33) est fixé, en particulier vissé, à plusieurs, en particulier à trois, saillies de fixation (35) du corps de base (3), réparties sur la périphérie et faisant saillie vers l'avant dans l'ouverture centrale (12).
